# DEMANDE DE BREVET EUROPEEN

(11) **EP 4 778 661 A1**
(43) Date de publication de la demande: **22.07.2026**
(21) Numéro de dépôt: 25226146.6
(22) Date de dépôt: 22.12.2025
(51) Int. Cl.: B23K 9/04, B22F 10/25, B23K 9/18

(54) **FABRICATION D'UNE PIECE EN ALLIAGE A BASE DE FER**

(30) Priorité: 16.01.2025 FR 2500442
(71) Demandeur: Electricité de France, 75008 Paris (FR); Institut National des Sciences Appliquées de Lyon (Insa Lyon), 69100 Villeurbanne (FR); Centre National de la Recherche Scientifique, 75016 Paris (FR); UNIVERSITE CLAUDE BERNARD LYON 1, 69100 Villeurbanne (FR)
(72) Inventeur: VILLARET, Flore, 77250 Moret Sur Loing (FR); KIEFFER, Antoine, 77300 Fontainebleu (FR); PEREZ, Michel, 01 700 Miribel (FR); BOULNAT, Xavier, 69730 Genay (FR)
(74) Mandataire: Plasseraud IP

(57) **Abrégé**

Un procédé de fabrication d'une pièce (2) en alliage à base de fer est de type fabrication additive à arc sous flux. Le procédé permet d'obtenir la pièce avec des caractéristiques requises de résistance mécanique, notamment de résilience, directement après sa formation sans qu'il soit nécessaire d'appliquer à cette pièce un traitement thermique de reprise à 500°C ou plus. Le procédé est particulièrement adapté pour des pièces de grandes tailles, notamment des pièces qui sont destinées à entrer dans la constitution d'une centrale nucléaire.

## Description

### Domaine technique

La présente description concerne un procédé de fabrication d'une pièce en alliage à base de fer, ainsi qu'une pièce qui a été fabriquée de cette façon.

### Technique antérieure

Certaines applications nécessitent des pièces en alliage à base de fer qui satisfont des caractéristiques mécaniques spécifiques, telles que des scores de résilience et/ou de résistance en traction. Ces pièces sont couramment fabriquées par des procédés de moulage et de forgeage, puis elles sont soumises en reprise à des traitements thermiques qui leur confèrent les caractéristiques mécaniques voulues. De tels traitements thermiques sont notamment des recuits à au moins 500°C (degré Celsius) pour supprimer des contraintes d'écrouissage dues à l'étape de forgeage, et/ou des traitements de trempe à au moins 750°C.

Tel est le cas de la fabrication de pièces pour le domaine nucléaire, par exemple la fabrication d'éléments de cuve ou de certaines pièces des circuits primaires pour centrales nucléaires. En outre, certaines de ces pièces sont de très grandes dimensions, par exemple de plusieurs dizaines de tonnes. Ces dimensions très grandes rendent difficile l'étape de coulée du lingot d'alliage qui est utilisé, et empêchent de contrôler des écarts de vitesse de refroidissement qui apparaissent lors d'un traitement thermique appliqué après le forgeage. A cause de cela, ces pièces de très grandes dimensions peuvent présenter des inhomogénéités de microstructure et de propriétés mécaniques, qui peuvent rendre difficiles leur homologation par rapport au cahier des charges exigé.

Pour les pièces qui sont destinées aux centrales nucléaires, le cahier des charges est fourni par le code RCC-M, pour Règles de Conception et de Construction des matériels Mécaniques, qui est disponible publiquement.

### Problème technique

A partir de cette situation, un but de la présente invention est de fournir un procédé de fabrication de pièces qui satisfont des exigences mécaniques prescrites, le procédé proposé étant plus simple, plus rapide et plus économique que celui basé sur du moulage-forgeage.

Un autre but de l'invention est de fournir des pièces qui satisfont des exigences mécaniques directement après leur formage, sans qu'un traitement thermique ultérieur soit nécessaire.

Encore un autre but de l'invention est de fournir des pièces de grandes dimensions telles que requises pour des utilisations dans des centrales nucléaires, avec des durées et des coûts de fabrication qui sont réduits.

### Résumé de l'invention

Pour atteindre l'un au moins de ces buts ou un autre, un premier aspect de l'invention propose un procédé de fabrication d'une pièce en alliage à base de fer, de type alliage faiblement allié où le fer a une teneur massique dans l'alliage, exprimée pourcentage massique, qui est supérieure à 95,0%. Ce procédé est de type fabrication additive à arc sous flux, suivant lequel la pièce est formée progressivement par dépôt de segments superposés de l'alliage, l'alliage étant apporté pour chaque segment par au moins deux têtes d'alimentation qui délivrent des fils respectifs d'apport de matière en même temps que ces têtes d'alimentation conduisent des courants électriques respectifs pour s'écouler du fil d'apport de matière de chaque tête d'alimentation à la pièce en cours de fabrication, en causant une fusion de l'alliage entre chaque fil d'apport de matière et la pièce en cours de fabrication, le procédé comprenant d'amener en outre une quantité de fondant, appelé flux. Un tel procédé peut être exécuté continûment pendant la durée de formation de la pièce.

Selon une première caractéristique du procédé, les têtes d'alimentation sont disposées de sorte que la fusion de l'alliage entre chaque fil d'apport de matière et la pièce en cours de fabrication constitue un bain de fusion qui est unique et commun aux fils d'apport de matière. En outre, un système d'apport du flux est conçu pour que ce flux recouvre le bain de fusion.

Selon une deuxième caractéristique du procédé, les fils d'apport de matière sont amenés au bain de fusion par les têtes d'alimentation avec des vitesses respectives de dépôt d'alliage comprises chacune entre 5 kg/h (kilogramme par heure) et 25 kg/h par tête d'alimentation, et avec un flux de chaleur produit par chaque courant électrique qui est compris entre 4 MJ/kg (mégajoule par kilogramme) et 10 MJ/kg aussi pour chaque tête d'alimentation. Ce flux de chaleur est calculé comme le quotient d'une puissance électrique qui est dissipée par le courant électrique de la tête d'alimentation, sur la vitesse de dépôt d'alliage qui est relative à la même tête d'alimentation. Ainsi, une pièce de quelques dizaines de tonnes peut être fabriquée en quelques dizaines de jours, d'une façon qui est compatible avec un coût de fabrication acceptable.

Selon l'invention, ces caractéristiques du procédé permettent que trois éprouvettes de test de résilience, découpées dans la pièce fabriquée après que cette pièce a refroidi jusqu'à 25°C et sans que la pièce ni les éprouvettes de test de résilience soient réchauffées à plus de 500°C, présentent des énergies de rupture KV qui sont supérieures ou égales à 56 J (joule), lorsque chaque éprouvette de test de résilience possède une géométrie de type KV conforme à la norme NF EN ISO 148 (2017), et le test de résilience est réalisé à -20°C conformément à la norme ISO 148-1 (2017) avec un mouton Charpy RKP450, les trois éprouvettes de test de résilience ayant, avant d'être découpées dans la pièce fabriquée, des directions longitudinales qui sont parallèles respectivement aux segments de formation de la pièce, à une direction de superposition de ces segments de formation, et à une direction d'épaisseur de la pièce qui est perpendiculaire aux segments de formation et à la direction de superposition. Ainsi, il n'est pas nécessaire que la pièce soit réchauffée à plus 500°C, notamment vers 700°C, en reprise après qu'elle a été formée pour qu'elle satisfasse la valeur minimale de résilience de 56 J. Ceci est particulièrement avantageux pour des pièces fabriquées qui sont de grandes tailles ou très grandes tailles, par exemple de quelques dizaines ou centaines de kilogrammes à quelques centaines de tonnes, pour lesquelles un réchauffage en reprise est onéreux sans qu'une répartition de température puisse être suffisamment contrôlée à travers la pièce. Une explication pour une telle obtention directe d'une résilience suffisante est que le dépôt de chaque segment d'alliage dans la superposition qui forme la pièce provoque un réchauffage à plus de 500°C, voire à plus de 750°C, du segment d'alliage sous-jacent, procurant à ce dernier sa résilience élevée. Ainsi, le procédé de formage incorpore déjà un réchauffage qui procure les caractéristiques mécaniques voulues à la pièce d'alliage.

Des avantages du procédé de l'invention sont :
- les caractéristiques mécaniques requises sont obtenues sans traitement thermique qui soit réalisé en reprise, notamment sans traitement de trempe thermique ni traitement de recuit dit «de qualité» ;
- la pièce fabriquée présente une bonne homogénéité de composition chimique ;
- la pièce fabriquée présente une bonne homogénéité et une bonne isotropie pour ses caractéristiques mécaniques ; et
- les caractéristiques mécaniques, notamment de résilience, sont améliorées à composition chimique équivalente.

Des avantages subsidiaires sont :
- le procédé permet un gain de productivité dans la fabrication de la pièce ;
- une durée et un coût de fabrication de la pièce sont réduits, notamment grâce à l'absence de traitement thermique qui soit réalisé en reprise ;
- le procédé permet de réduire un coût énergétique de fabrication de la pièce, notamment grâce à l'absence de traitement thermique réalisé en reprise ;
- le procédé de fabrication, du type fabrication additive, permet de réaliser certaines réparations locales de la pièce en cours de fabrication, dans une mesure facilitée par rapport aux procédés de moulage et de forgeage ; et
- un dispositif de fabrication adapté pour mettre en œuvre le procédé de l'invention est moins onéreux, pour des pièces à fabriquer qui ont des tailles importantes, que les dispositifs nécessaires pour les procédés de moulage et de forgeage.

De préférence, un nombre des têtes d'alimentation dont les fils d'apport de matière partagent le bain de fusion peut être deux, trois, quatre ou cinq. Il est ainsi possible d'ajuster la vitesse de formation de la pièce en adaptant le nombre des têtes d'alimentation.

Optionnellement, lorsque trois éprouvettes de test de traction sont découpées dans la pièce fabriquée, après que la pièce a refroidi jusqu'à 25°C et sans que la pièce ni les éprouvettes de test de traction soient réchauffées à plus de 500°C, ces trois éprouvettes de test de traction peuvent présenter des allongements à rupture A qui sont supérieurs ou égaux à 20%, lorsque chaque éprouvette de test de traction est conforme à la norme ISO 6892-1 (2019) avec une partie utile cylindrique de diamètre 6 mm, et lorsque le test de traction est réalisé à 25°C avec une machine de traction ADAMEL 20/MH conforme à la section 20 de la norme ISO 6892-1 (2019), les trois éprouvettes de test de traction ayant, avant d'être découpées dans la pièce fabriquée, des directions longitudinales qui sont parallèles respectivement aux segments de formation de la pièce, à la direction de superposition des segments de formation, et à la direction d'épaisseur de la pièce.

Possiblement en outre, les trois éprouvettes de test de traction peuvent présenter des valeurs de contrainte de traction Rp0.2% pour un allongement de 0,2% d'au moins 275 MPa (mégapascal), de préférence supérieure à 450 MPa.

Possiblement encore, les trois éprouvettes de test de traction peuvent présenter des valeurs de contrainte de traction Rm pour une apparition de striction d'au moins 470 MPa, de préférence au moins 550 MPa.

Il n'est donc pas nécessaire non plus que la pièce soit réchauffée à plus 500°C, notamment vers 700°C, pour qu'elle satisfasse ces valeurs minimales d'allongement à la rupture A, de contrainte de traction Rp0.2% pour un allongement de 0,2%, et de contrainte de traction Rm à l'apparition de striction.

Optionnellement, la pièce fabriquée peut présenter des teneurs respectives en carbone (C), silicium (Si), manganèse (Mn), nickel (Ni) et molybdène (Mo) qui sont inférieures respectivement à 0,25%, 0,60%, 1,60%, 1,03% et 0,62%, exprimées en pourcentages massiques dans l'alliage. De telles caractéristiques de composition chimique sont homogènes dans la pièce fabriquée à une échelle macroscopique, par exemple entre des points de mesure qui sont distants de 50 mm.

Le procédé est particulièrement adapté pour des pièces qui sont destinées à une centrale nucléaire, parce que les caractéristiques précédentes de résilience, de résistance à la traction et de composition chimique sont compatibles avec les exigences de cette application. En particulier, la pièce fabriquée peut être une pièce de cuve de réacteur de centrale nucléaire, notamment un fond de cuve, une paroi latérale de cuve, une tubulure de cuve ou un couvercle de cuve, ou une paroi latérale de pressuriseur de centrale nucléaire, ou une pièce de générateur de vapeur de centrale nucléaire, notamment un fond de générateur de vapeur, une plaque tubulaire de générateur de vapeur, une paroi latérale de générateur de vapeur ou un dôme de générateur de vapeur, ou une pièce de pompe, de vanne ou de robinet de circuit primaire, secondaire ou tertiaire de centrale nucléaire, notamment une volute de pompe ou un corps de robinet de vapeur vive principale.

De préférence, chaque fil d'apport de matière peut posséder une composition S3Ni1Mo selon la norme ISO 14171-A (2016), et le flux peut posséder une composition S A FB 1 55 AC H5 selon la norme ISO 14174 (2019). Ces compositions chimiques pour les fils d'apport et pour le flux permettent d'obtenir la pièce avec une composition chimique qui satisfait les exigences de composition imposées aux pièces de centrale nucléaire, notamment pour les types de pièces qui ont été énumérés précédemment.

De préférence, un diamètre de chaque fil d'apport de matière peut être compris entre 3 mm (millimètre) et 8 mm.

Enfin, un second aspect de l'invention concerne une pièce en alliage à base de fer, de type alliage faiblement allié où le fer a une teneur massique dans l'alliage qui est supérieure à 95,0%, cette pièce ayant été fabriquée selon un procédé conforme au premier aspect de l'invention. En particulier, la pièce peut être de l'un des types énumérés plus haut pour être utilisée dans une centrale nucléaire.

### Brève description des figures

Les caractéristiques et avantages de la présente invention apparaîtront plus clairement dans la description détaillée ci-après d'exemples de mise en œuvre non-limitatifs, en référence aux figures annexées parmi lesquelles :
[Fig. 1] montre certains éléments principaux d'un système de fabrication de pièces utilisable avec la présente description ;
[Fig. 2] est un tableau qui récapitule des exigences de composition chimique prescrites pour des pièces de centrale nucléaire ;
[Fig. 3a] est un schéma en perspective d'un réacteur de centrale nucléaire avec le circuit primaire associé ;
[Fig. 3b] est un schéma d'une partie du circuit primaire et d'un circuit secondaire associé pour le réacteur de centrale nucléaire de [Fig. 3a] ;
[Fig. 4] regroupe plusieurs vues de définition géométrique d'une éprouvette de test de résilience ;
[Fig. 5] regroupe plusieurs vues de définition géométrique d'une éprouvette de test de traction ; et
[Fig. 6] est un tableau qui récapitule des exigences mécaniques prescrites pour des pièces de centrale nucléaire.

### Description détaillée de l'invention

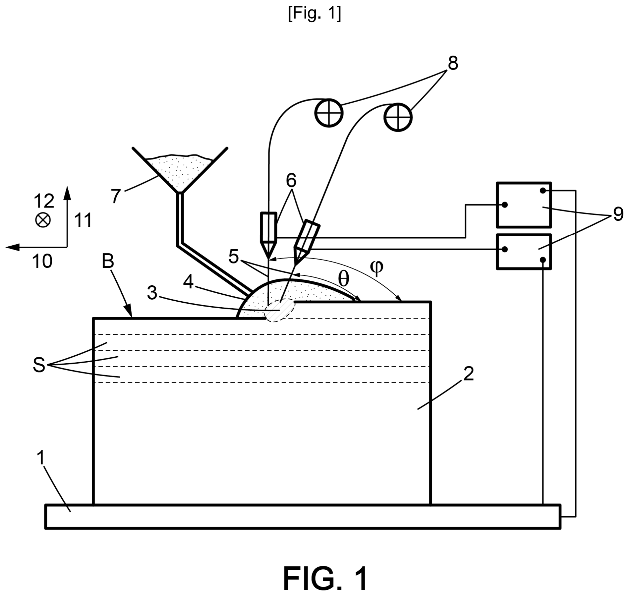

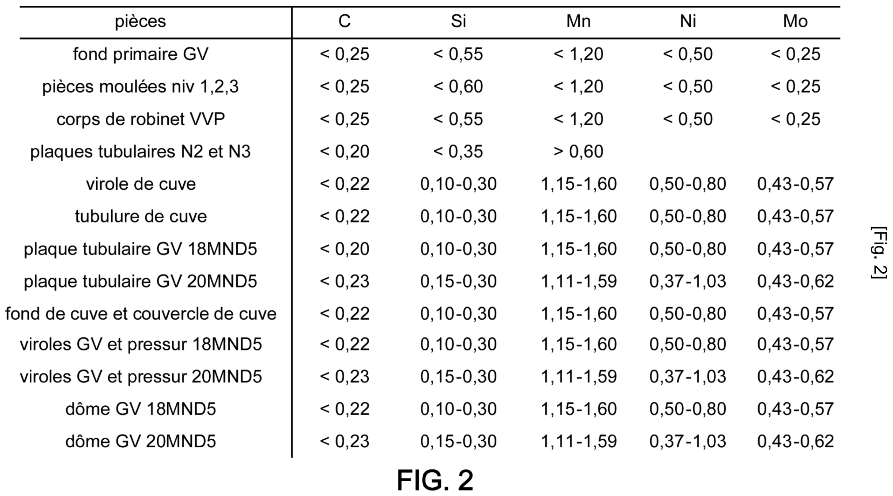

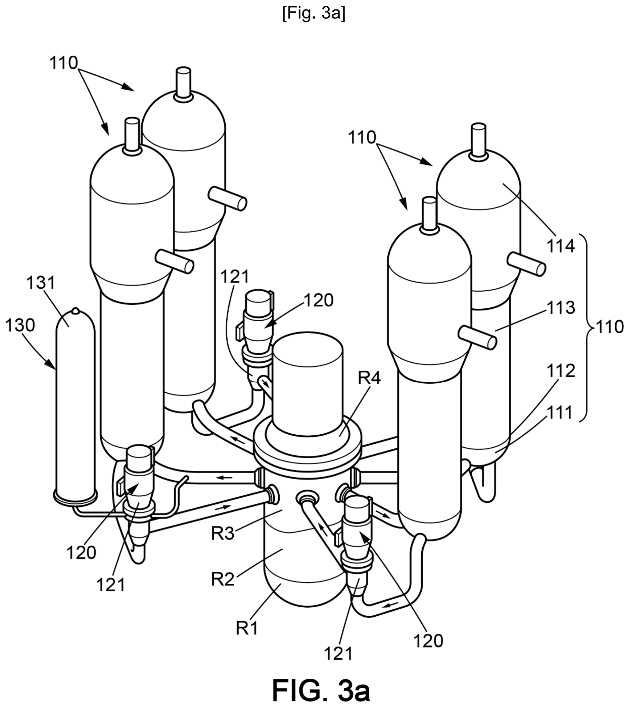

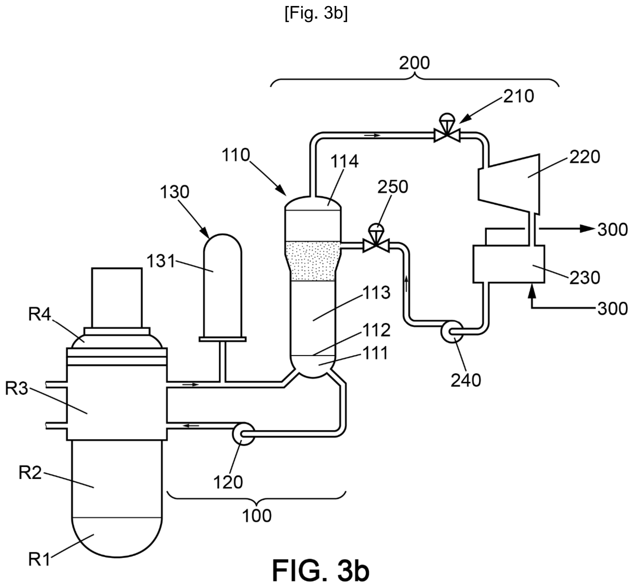

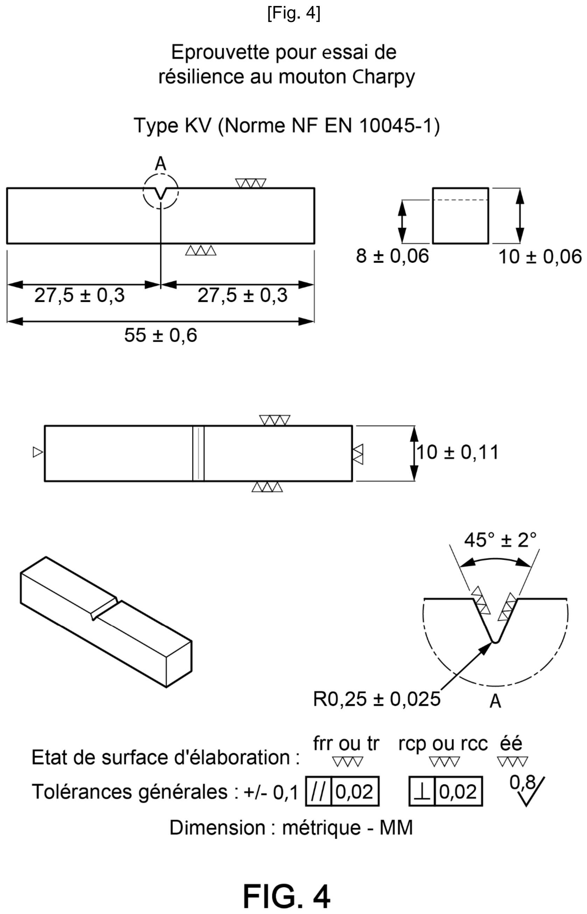

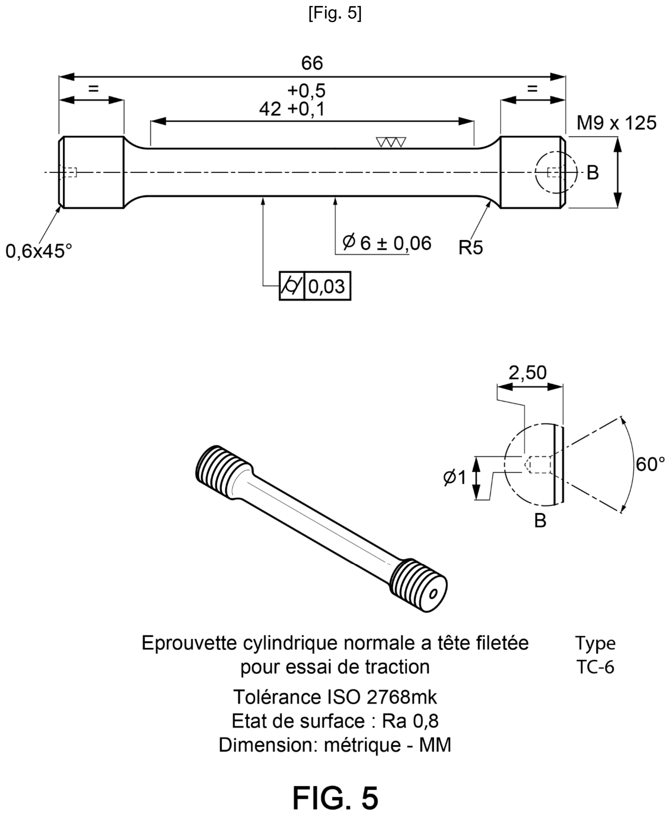

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement dans [Fig. 1], [Fig. 3a] et [Fig. 3b]. De plus, les valeurs de teneurs de compositions chimiques dans le tableau de [Fig. 2] sont toutes exprimées en tant que pourcentages massiques dans les alliages, et les dimensions linéaires indiquées dans [Fig. 4] et [Fig. 5] sont toutes exprimées en millimètres (mm).

Dans [Fig. 1], la référence 2 désigne une pièce qui est en cours de fabrication, en alliage faiblement allié à base de fer. Cette pièce est maintenue par un support 1, et ce dernier est conçu pour présenter horizontalement et vers le haut un bord B de la pièce 2 où de la matière est en train d'être apportée, sensiblement en dessous de têtes d'alimentation 6, par exemple deux têtes d'alimentation. Le support 1 déplace progressivement la pièce 2 par rapport aux têtes d'alimentation 6, de sorte que la matière apportée par les têtes d'alimentation 6 soit déposée sous forme de segments S de formation de la pièce, qui sont superposés dans la pièce 2. [Fig. 1] montre en traits interrompus plusieurs segments S d'alliage superposés. Chaque tête d'alimentation 6 amène un fil d'apport de matière 5 respectif jusqu'à la zone du bord B de la pièce 2 où la matière est transférée à la pièce 2 par solidification pour continuer sa formation. Chaque fil d'apport de matière 5 provient d'une réserve respective 8, par exemple d'une bobine ou d'un fût qui contient le fil prêt à être fourni. Chaque fil d'apport de matière 5 est ainsi délivré à la zone de formation de la pièce 2 avec une vitesse d'entraînement linéaire qui peut être appliquée par la tête d'alimentation 6 correspondante. Le procédé de fabrication de la pièce 2 est continu dans le temps, et pendant la durée de cette fabrication, chaque fil d'apport de matière 5 constitue un chemin de circulation de courant électrique entre la tête d'alimentation 6 correspondante et la pièce 2. Un générateur électrique 9 qui est associé à chaque tête d'alimentation 6, amène un courant électrique au fil d'apport de matière 5, par cette tête d'alimentation, et ce courant électrique est repris au niveau du support 1. Ces courants électriques, qui peuvent être continus ou alternatifs, ont les deux fonctions suivantes : d'une part chauffer les fils d'apport de matière 5 entre les têtes d'alimentation 6 et le bord de la pièce 2, et d'autre part entretenir un bain de fusion 3 sur le bord de la pièce 2, sous lequel bain de fusion une quantité d'alliage se solidifie continûment en s'ajoutant à la pièce 2. Ce dépôt continu de l'alliage, en même temps que la pièce 2 est déplacée par le support 1, produit un segment d'alliage S sur le bord B de la pièce 2 selon un procédé de fabrication additive, qui poursuit la formation de la pièce 2. Un système 7 d'apport de fondant, aussi appelé flux, comprenant par exemple une trémie, un conduit d'amenée et un organe de contrôle de débit du flux, est conçu pour que le flux constitue une couverture 4 du bain de fusion 3. Cette couverture 4 assure que le bain de fusion 3 ne soit pas au contact de l'air, empêchant ainsi une oxydation de l'alliage, et concentre une partie de la puissance calorifique qui est produite par les courants électriques par effet Joule pour maintenir le bain de fusion 3 à l'état liquide. De préférence, le flux peut être délivré sous forme d'une poudre solide par le système d'apport 7. Les références 10, 11 et 12 désignent respectivement la direction du segment d'alliage S qui est en cours de dépôt pour former la pièce 2, orientée dans le sens de la progression de formation de la pièce 2, la direction de superposition des segments d'alliage S dans la pièce 2 et une direction d'épaisseur de la pièce 2 qui est perpendiculaire aux deux précédentes.

Les têtes 6 d'alimentation en fils d'apport de matière 5 sont disposées au-dessus du bord supérieur de la pièce 2 en cours de fabrication, et inclinées chacune de sorte que le bain de fusion 3 soit commun aux fils d'apport de matière 5, c'est-à-dire que ce bain de fusion 3 est unique et s'étend continûment entre les endroits d'arrivée respectifs de tous les fils d'apport de matière 5 qui sont utilisés simultanément. Ainsi, tous les fils d'apport de matière 5 contribuent à former un même segment d'alliage unique qui est en cours de dépôt par solidification sur la pièce 2.

Les paramètres supplémentaires suivants peuvent être utilisés pour mettre en œuvre le procédé de fabrication additive, à titre d'exemples non-limitatifs :
nombre des têtes d'alimentation 6 : deux
composition de la matière dans les fils d'apport 5 : S3Ni1Mo selon la norme ISO 14171-A (2016)
diamètre des fils d'apport 5 : par exemple 4 mm
angles d'inclinaison θ et φ des fils d'apport 5 par rapport au bord de la pièce 2 : chacun entre 30° (degré) et 150°
longueur des fils d'apport de matière 5 entre chaque tête d'alimentation 6 et le bain de fusion 3 : entre 25 mm et 200 mm
intensité du courant électrique qui est injecté dans chaque fil d'apport de matière 5 par la tête d'alimentation 6 correspondante : entre 100 A (ampère) et 1000 A
tension électrique délivrée par chaque générateur électrique 9 : entre 25 V (volt) et 45 V
vitesse linéaire d'entraînement de chaque fil d'apport de matière 5 dans la tête d'alimentation 6 correspondante : entre 800 mm/min (millimètre par minute) et 4400 mm/min
vitesse linéaire de déplacement du bain de fusion 3 sur la pièce 2 selon la direction 10 : entre 500 mm/min et 1500 mm/min
composition du flux: S A FB 1 55 AC H5 selon la norme ISO 14174 (2019)
débit d'amenée du flux : entre 10 kg/h (kilogramme par heure) et 75 kg/h

Dans ces conditions, le tableau 1 ci-dessous regroupe les teneurs massiques, notées %mass et exprimées en pourcents par rapport à la composition totale de l'alliage, des éléments carbone (C), silicium (Si), manganèse (Mn), nickel (Ni) et molybdène (Mo) qui ont été mesurées dans la pièce 2 après la fin de sa fabrication selon le procédé qui vient d'être décrit :

**Tableau 1**

| Elément | C | Si | Mn | Ni | Mo |
|---|---|---|---|---|---|
| %mass | <0.12% | 0.1%-0.3% | 0.8%-1.8% | <1.2% | 0.35%-0.65% |

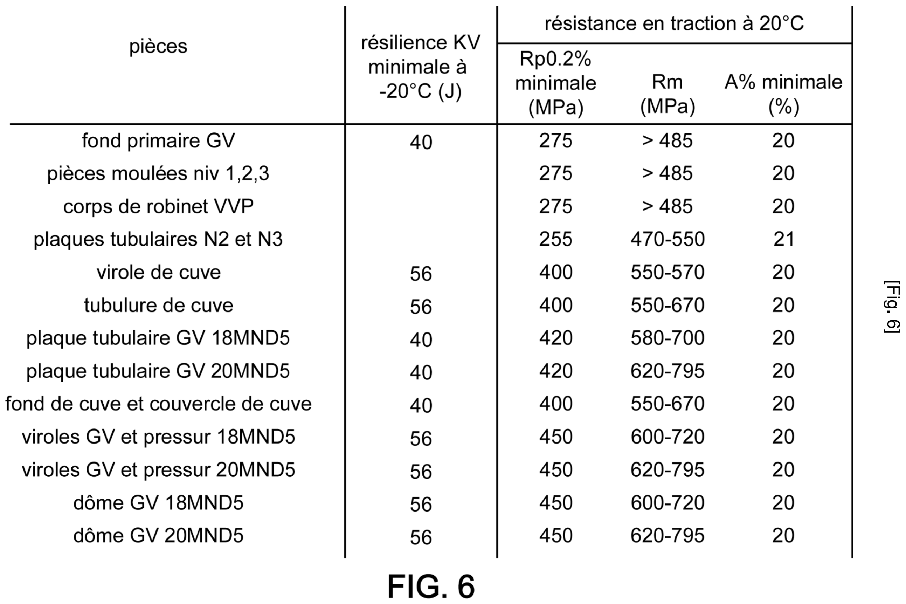

Le tableau de [Fig. 2] regroupe des exigences de composition chimique telles que prescrites par le code RCC-M et encore exprimées en pourcentages massiques par rapport à la composition totale de l'alliage. Comme cela apparaît, les teneurs massiques mesurées pour la pièce 2 qui a été fabriquée selon le procédé décrit ici sont compatibles avec les exigences de nombreuses pièces du tableau de [Fig. 2]. Dans ce tableau, ainsi que celui de [Fig. 6], les libellés de pièces indiqués ont les significations suivantes pour des utilisations dans une centrale nucléaire, par exemple telles qu'illustrées par [Fig. 3a] et [Fig. 3b] :
«fond primaire GV» : fond 111 de générateur de vapeur 110, du côté du circuit primaire 100
«pièces moulées niv 1, 2, 3» : pièces des circuits primaire 100, secondaire 200 et tertiaire 300 qui sont formées par moulage dans l'art antérieur, comprenant notamment des corps de vannes et des volutes de pompes
«corps de robinet VVP» : corps de robinet 210 de vapeur vive principale, situé entre chaque générateur de vapeur 110 et la turbine 220 de circuit secondaire 200
«plaques tubulaires N2 et N3» : plaques tubulaires des échangeurs de chaleur des circuits secondaire 200 et tertiaire 300
«plaque tubulaire GV 18MND5 (resp. 20MND5)» : plaque tubulaire 112 du générateur de vapeur 110 lorsqu'elle est en alliage 18MND5 (resp. 20MND5)
«viroles GV et pressur 18MND5 (resp. 20MND5)» : parois latérales respectives 113, 131 du générateur de vapeur 110 et du pressuriseur 130 lorsqu'elles sont en alliage 18MND5 (resp. 20MND5)
«dôme GV 18MND5 (resp. 20MND5)» : dôme 114 du générateur de vapeur 110 lorsqu'il est en alliage 18MND5 (resp. 20MND5)

Ces pièces apparaissent dans [Fig. 3a] et [Fig. 3b] de la façon qui est décrite maintenant. Les références R1, R2, R3 et R4 désignent respectivement le fond, la paroi latérale aussi appelée virole, la tubulure de cuve et le couvercle de cuve du réacteur nucléaire. De façon connue, la tubulure de cuve R3 supporte des tubes qui transfèrent au circuit primaire 100 la chaleur produite par le réacteur, en générant la vapeur vive principale (VVP). Plusieurs boucles, quatre dans l'exemple représenté, du circuit primaire 100 à fonction de refroidissement du réacteur, entrent et sortent de la tubulure de cuve R3 en comprenant chacune un générateur de vapeur 110 et une pompe 120. Chaque générateur de vapeur 110 comprend un fond de générateur de vapeur 111, une plaque tubulaire de générateur de vapeur 112, une paroi latérale de générateur de vapeur 113 et un dôme de générateur de vapeur 114. La référence 121 désigne la volute de chaque pompe 120. En outre, le circuit primaire 100 comprend un pressuriseur 130, qui possède la paroi latérale de pressuriseur 131. Comme montré dans [Fig. 3b], chaque circuit secondaire 200 comprend, des robinets et vannes 210 de vapeur vive principale (VVP), une turbine 220, un condenseur 230, une pompe 240 et une vanne de régulation 250 qui est située avant le retour de liquide au générateur de vapeur 110 qui est associé à ce circuit secondaire 200. La plaque tubulaire de l'échangeur de chaleur qui est intermédiaire entre le circuit secondaire 200 et le circuit tertiaire 300 est contenue dans le condenseur 230.

Deux tests de résistance mécanique ont été pratiqués sur la pièce 2 après que celle-ci a été formée selon le procédé de fabrication additive décrit plus haut, et sans qu'elle ait été réchauffée à plus de 500°C après sa formation. Ces deux tests de résistance mécanique sont un test de résilience et un test de résistance à la traction.

Le test de résilience a été réalisé sur trois ensembles de trois éprouvettes découpées dans la pièce 2 puis usinées chacune pour obtenir les caractéristiques géométriques montrées par [Fig. 4]. Chaque éprouvette de test de résilience possède ainsi une forme allongée parallélépipédique de 10 x 10 x 55 mm³, avec une entaille à section triangulaire, de 45° d'ouverture angulaire et 2 mm de profondeur au centre de l'un de ses côtés, et un rayon de courbure en fond d'entaille de 0,25 mm. Un tel modèle d'éprouvette est du type KV conforme à la norme NF EN ISO 148 (2017). Les éprouvettes sont découpées dans la pièce 2 pour que leurs directions longitudinales respectives correspondent à la direction 10 pour le premier ensemble d'éprouvettes de test de résilience, à la direction 11 pour le second ensemble et à la direction 12 pour le troisième ensemble. Les trois éprouvettes d'un même ensemble sont testées successivement en résilience conformément à la norme ISO 148-1 (2017) avec un mouton de type Charpy RKP450 lorsqu'elles sont à une température de -20°C. En particulier, le mouton frappe chaque éprouvette testée du côté opposé à l'entaille, avec une énergie de 450 J et un couteau de frappe d'épaisseur 2 mm. La caractéristique qui est fournie par un tel test de résilience est l'énergie, notée KV et exprimée en joules, absorbée par la rupture de chaque éprouvette sous l'effet du choc par le couteau du mouton, et une valeur moyenne d'énergie absorbée est calculée séparément pour chaque ensemble d'éprouvettes qui correspond à l'une des directions 10, 11 et 12.

Le test de résistance à la traction a été réalisé sur trois paires d'autres éprouvettes aussi découpées dans la pièce 2 mais usinées ensuite chacune pour obtenir les caractéristiques géométriques montrées par [Fig. 5]. Chaque éprouvette de test de traction possède ainsi une forme allongée avec une partie utile centrale qui est cylindrique de diamètre 6 mm et de longueur 42 mm, et qui se prolonge à ses deux extrémités opposées par des têtes filetées avec des congés de raccordements intermédiaires à 5 mm de rayon de courbure. Un tel modèle d'éprouvette est conforme à la norme ISO 6892-1 (2019). Ces autres éprouvettes sont aussi découpées dans la pièce 2 pour que leurs directions longitudinales respectives correspondent à la direction 10 pour la première paire d'éprouvettes de test de traction, à la direction 11 pour la seconde paire et à la direction 12 pour la troisième paire. Les deux éprouvettes de chaque paire sont testées successivement en résistance à la traction lorsqu'elles sont à température ambiante, typiquement 20°C, avec une machine de traction de type ADAMEL 20/MH conformément à la section 20 de la norme ISO 6892-1 (2019). La méthode d'asservissement du test est celle A2 telle que définie dans cette norme : la vitesse de déformation de l'éprouvette est contrôlée par celle d'éloignement des traverses, correspondant à une vitesse d'allongement de 0,0002 s⁻¹ (allongement relatif par seconde) produite par une vitesse d'éloignement des traverses de 0,6 mm/min (millimètre par minute) afin de déterminer la contrainte de déformation pour 0,2% d'allongement, notée Rp0.2%, ainsi que la contrainte d'apparition de striction, notée Rm. L'allongement à la rupture, noté A et exprimé en pourcents a été mesuré après rupture de l'échantillon conformément à la section 20 de la même norme. Les valeurs de Rp0.2%, Rm et A sont ensuite calculées en tant que valeurs moyennes séparément pour chaque paire d'éprouvettes testées en traction. Enfin, l'extensomètre utilisé pour le suivi de chaque test de résistance à la traction est du type à bobine LVDT, pour «Linear Variable Differential Transformer» en anglais, ou transducteur différentiel variable linéaire.

Le tableau 2 ci-dessous regroupe les résultats de ces deux tests de résistance mécanique. Pour chaque test, aucune différence significative n'a été observée entre les directions de découpe des éprouvettes par rapport à la pièce 2, et les valeurs indiquées sont les moyennes calculées sur les trois ensembles ou paires d'éprouvettes de chaque test :

**Tableau 2**

| Test de résistance mécanique | Résilience KV à -20°C (valeurs moyennes) | Traction à 20°C (valeurs moyennes) | | |
|---|---|---|---|---|
| | | Rp0.2% | Rm | A% |
| Valeur | 174 J | 601 MPa | 700 MPa | 23.5% |

Le tableau de [Fig. 6] reproduit les exigences de résistance mécanique telles que prescrites par le code RCC-M. Comme cela apparaît, les résultats des tests de résilience et de résistance à la traction obtenus pour la pièce 2 qui a été fabriquée selon le procédé décrit ici sont compatibles avec les exigences de nombreuses pièces du tableau de [Fig. 6].

Il est entendu que le procédé de fabrication décrit peut être reproduit en modifiant des aspects secondaires de celui-ci, mais tout en conservant certains au moins des avantages cités. En particulier, les fils d'apport de matière peuvent être préchauffés en amont des têtes d'alimentation, indépendamment d'un chauffage qui est dédié au maintien du bain de fusion à l'état liquide. Notamment, les fils d'apport de matière peuvent être préchauffés alternativement par induction ou par injection de courants électriques, et d'autres courants électriques peuvent être dédiés simultanément à l'apport de puissance calorifique au bain de fusion. En outre, chaque courant électrique qui est mis en œuvre pour apporter de la puissance calorifique de préchauffage à un des fils d'apport de matière et/ou pour maintenir le bain de fusion à l'état liquide, peut être un courant continu ou un courant alternatif, en tenant compte des exigences de sécurité électrique qui peuvent être imposées. Enfin, toutes les valeurs numériques qui ont été citées sans avoir été mentionnées comme étant nécessaires ne l'ont été qu'à titre d'illustration, et peuvent être changées en fonction de chaque mise en œuvre particulière.

## Revendications

1. Procédé de fabrication d'une pièce (2) en alliage à base de fer, de type alliage faiblement allié où le fer a une teneur massique dans l'alliage qui est supérieure à 95,0%,
le procédé étant de type fabrication additive à arc sous flux, suivant lequel la pièce (2) est formée progressivement par dépôt de segments (S) superposés de l'alliage, l'alliage étant apporté pour chaque segment par au moins deux têtes d'alimentation (6) qui délivrent des fils (5) respectifs d'apport de matière en même temps que lesdites têtes d'alimentation conduisent des courants électriques respectifs pour s'écouler du fil d'apport de matière de chaque tête d'alimentation à la pièce en cours de fabrication, en causant une fusion de l'alliage entre chaque fil d'apport de matière et ladite pièce en cours de fabrication, le procédé comprenant d'amener en outre une quantité de fondant, appelé flux,
suivant lequel les têtes d'alimentation (6) sont disposées de sorte que la fusion de l'alliage entre chaque fil d'apport de matière (5) et la pièce (2) en cours de fabrication constitue un bain de fusion (3) qui est unique et commun aux fils d'apport de matière, et suivant lequel un système (7) d'apport du flux est conçu pour que ledit flux recouvre le bain de fusion,
suivant lequel les fils d'apport de matière (5) sont amenés au bain de fusion (3) par les têtes d'alimentation (6) avec des vitesses respectives de dépôt d'alliage comprises chacune entre 5 kg/h et 25 kg/h par tête d'alimentation, et avec un flux de chaleur produit par chaque courant électrique qui est compris entre 4 MJ/kg et 10 MJ/kg aussi pour chaque tête d'alimentation, calculé comme un quotient d'une puissance électrique dissipée par le courant électrique de ladite tête d'alimentation, sur la vitesse de dépôt d'alliage relative à la même tête d'alimentation,
de sorte que lorsque trois éprouvettes de test de résilience sont découpées dans la pièce (2) fabriquée, après que ladite pièce a refroidi jusqu'à 25°C et sans que la pièce ni les éprouvettes de test de résilience soient réchauffées à plus de 500°C, les trois éprouvettes de test de résilience présentent des énergies de rupture KV qui sont supérieures ou égales à 56 J, lorsque chaque éprouvette de test de résilience possède une géométrie de type KV conforme à la norme NF EN ISO 148 (2017), et le test de résilience est réalisé à -20°C conformément à la norme ISO 148-1 (2017) avec un mouton Charpy RKP450, les trois éprouvettes de test de résilience ayant, avant d'être découpées dans la pièce fabriquée,
des directions longitudinales qui sont parallèles respectivement aux segments (S) de formation de la pièce, à une direction de superposition desdits segments de formation, et à une direction d'épaisseur de la pièce qui est perpendiculaire auxdits segments de formation et à la direction de superposition.

2. Procédé selon la revendication 1, suivant lequel un nombre des têtes d'alimentation (6) dont les fils d'apport de matière (5) partagent le bain de fusion (3) est deux, trois, quatre ou cinq.

3. Procédé selon la revendication 1 ou 2, tel que lorsque trois éprouvettes de test de traction sont découpées dans la pièce (2) fabriquée, après que la pièce a refroidi jusqu'à 25°C et sans que la pièce ni les éprouvettes de test de traction soient réchauffées à plus de 500°C, les trois éprouvettes de test de traction présentent des allongements à rupture A qui sont supérieurs ou égaux à 20%, lorsque chaque éprouvette de test de traction est conforme à la norme ISO 6892-1 (2019) avec une partie utile cylindrique de diamètre 6 mm, et le test de traction est réalisé à 25°C avec une machine de traction ADAMEL 20/MH conforme à la section 20 de la norme ISO 6892-1 (2019), les trois éprouvettes de test de traction ayant, avant d'être découpées dans la pièce fabriquée, des directions longitudinales qui sont parallèles respectivement aux segments (S) de formation de la pièce, à la direction de superposition desdits segments de formation, et à la direction d'épaisseur de la pièce.

4. Procédé selon la revendication 3, tel que les trois éprouvettes de test de traction présentent des valeurs de contrainte de traction Rp0.2% pour un allongement de 0,2% d'au moins 275 MPa, de préférence supérieure à 450 MPa.

5. Procédé selon la revendication 3 ou 4, tel que les trois éprouvettes de test de traction présentent des valeurs de contrainte de traction Rm pour une apparition de striction d'au moins 470 MPa, de préférence au moins 550 MPa.

6. Procédé selon une des revendications précédentes, suivant lequel la pièce (2) fabriquée présente des teneurs respectives en carbone, silicium, manganèse, nickel et molybdène qui sont inférieures respectivement à 0,25%, 0,60%, 1,60%, 1,03% et 0,62%, exprimées en pourcentages massiques dans l'alliage.

7. Procédé selon une des revendications précédentes, suivant lequel la pièce (2) fabriquée est une pièce de cuve de réacteur de centrale nucléaire, notamment un fond de cuve (R1), une paroi latérale de cuve (R2), une tubulure de cuve (R3) ou un couvercle de cuve (R4), ou une paroi latérale de pressuriseur (131) de centrale nucléaire, ou une pièce de générateur de vapeur (110) de centrale nucléaire, notamment un fond de générateur de vapeur (111), une plaque tubulaire de générateur de vapeur (112), une paroi latérale de générateur de vapeur (113) ou un dôme de générateur de vapeur (114), ou une pièce de pompe (120, 240), de vanne ou de robinet de circuit primaire (100), secondaire (200) ou tertiaire (300) de centrale nucléaire, notamment une volute de pompe (121) ou un corps de robinet de vapeur vive principale (210).

8. Procédé selon une des revendications précédentes, suivant lequel chaque fil d'apport de matière (5) possède une composition S3Ni1Mo selon la norme ISO 14171-A (2016), et le flux possède une composition S A FB 1 55 AC H5 selon la norme ISO 14174 (2019).

9. Procédé selon une des revendications précédentes, suivant lequel un diamètre de chaque fil d'apport de matière (5) est compris entre 3 mm et 8 mm.

10. Pièce (2) en alliage à base de fer, de type alliage faiblement allié où le fer a une teneur massique dans l'alliage qui est supérieure à 95,0%, fabriquée selon un procédé conforme à une des revendications précédentes.
